# EUROPEAN PATENT APPLICATION

(11) **EP 1 978 768 A1**
(43) Date of publication of application: **08.10.2008**
(21) Application number: 06834549.5
(22) Date of filing: 13.12.2006
(51) Int. Cl.: H04Q 7/36, H04Q 7/34

(54) **MOBILE COMMUNICATION SYSTEM, WIRELESS NETWORK CONTROL DEVICE AND LOAD-DISTRIBUTION METHOD**

(30) Priority: 20.01.2006 JP 2006012391
(71) Applicant: NEC Corporation, Minato-ku Tokyo 108-8001 (JP)
(72) Inventor: KAWAGUCHI, Kenji, Tokyo 108-8001 (JP)
(74) Representative: Glawe, Delfs, Moll
(86) International application number: PCT/JP2006/324794
(87) International publication number: WO 2007/083462

(57) **Abstract**

A mobile communication system provides mobile devices with services while distributing loads in a plurality of wireless areas. A wireless base station covers a plurality of wireless areas among which loads can be distributed. A wireless network control device manages loads of the plurality of areas covered by the wireless base station. The wireless network control device seeks remaining wireless resources of the plurality of wireless areas from the loads of the plurality of wireless areas. The wireless network control device selects wireless areas assigned to mobile devices in accordance with a comparing result of the remaining wireless resources of the plurality of wireless areas.

## Description

### Technical field:

The present invention relates to a mobile communication system, and more particularly to a mobile communication system for distributing loads on wireless areas to provide services.

### Background art:

Mobile communication systems wherein a plurality of wireless base stations accommodate a plurality of mobile equipments are controlled to distribute the loads on a plurality of wireless areas (see, for example, JP-A No. 2004-282469). A load distribution control process will be described below with respect to an example in which loads are distributed on a plurality of wireless areas having different frequencies.

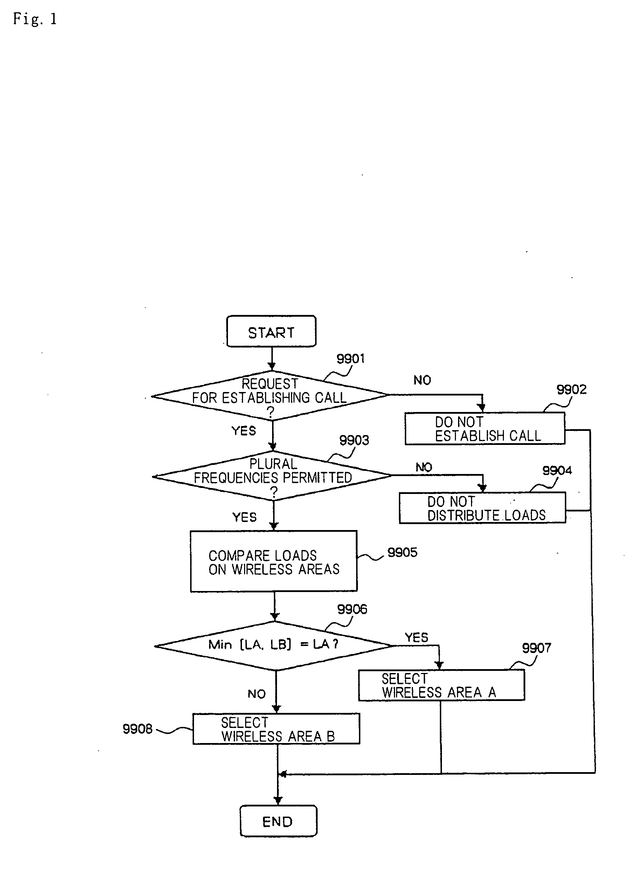

Fig. 1 is a flowchart of a load distribution control process in a mobile communication system. As shown in Fig. 1, the mobile communication system determines whether there is a request for establishing a call or not (step 9901). If there is not a request for establishing a call, then the mobile communication system does not establish a call and puts the process to an end (step 9902).

If there is a request for establishing a call, then the mobile communication system determines whether a plurality of frequencies are permitted or not (step 9903). If a plurality of frequencies are not permitted, then the mobile communication system establishes a call without distributing loads, and finishes the process (step 9904).

If a plurality of frequencies are permitted, then the mobile communication system compares the loads on wireless areas having the frequencies (step 9905). It is assumed that wireless area A and wireless area B are permitted. Wireless area A has load LA and wireless area B has load LB.

The mobile communication system determines whether a smaller one of LA, LB is equal to LA or not (step 9906). If a smaller one of LA, LB is equal to LA, then the mobile communication system selects wireless area A, and assigns wireless resources thereof to the mobile equipment (step 9907). If a smaller one of LA, LB is not equal to LA, then the mobile communication system selects wireless area B, and assigns wireless resources thereof to the mobile equipment (step 9908).

### Disclosure of the invention:

According to the above load distribution control process, since a wireless area to be assigned to the mobile equipment is selected by comparing the loads on the wireless areas, an appropriate wireless area may not be selected.

For example, there is an instance wherein the total capacity of wireless resources assignable to a mobile equipment differs from wireless area to wireless area. In such an instance, the remaining resources of a wireless area having a larger load could possibly be greater than the remaining resources of a wireless area having a smaller load. If a wireless area to be assigned to the mobile equipment is selected based on loads only, then small remaining resources of a wireless area may preferentially be assigned to the mobile equipment.
As a result, since the remaining resources of the wireless area are small, the mobile communication system may be unable to accept requests for providing various services from the mobile equipment after it has established an RRC connection.

There are a variety of services requested from the mobile equipment after an RRC connection is established. Required amounts of wireless resources and their characteristics differ from service to service. Consequently, wireless resources to be secured for a service and a remaining resource threshold for determining whether a service is permitted or not basically differ from service to service. However, the mobile communication system referred to above selects a wireless area simply by comparing the loads on wireless areas at the time without taking into account wireless resources to be secured and a remaining resource threshold for each service. Therefore, the mobile communication system may occasionally be unable to provide a service that is actually requested and as a result may suffer an increased call loss probability.

It is an object of the present invention to provide a mobile communication system which is capable of appropriately distributing the loads on wireless areas.

To achieve the above object, in accordance with the present invention, a mobile communication system for distributing loads on wireless areas to provide a service to a mobile equipment comprises a wireless base station apparatus and a wireless network controller.

The wireless base station apparatus provides a plurality of wireless areas on which loads can be distributed. The wireless network controller manages loads on the wireless areas provided by the wireless base station apparatus. The wireless network controller determines remaining resources of the wireless areas from the loads on the wireless areas, and selects a wireless area to be assigned to the mobile equipment based on the result produced by comparing the remaining resources of the wireless areas.

### Brief description of the drawings:

Fig. 1 is a flowchart of a load distribution control process in a mobile communication system;
Fig. 2 is a block diagram showing the configuration of a mobile communication system according to a first exemplary embodiment;
Fig. 3 is a block diagram of the configuration of an RNC;
Fig. 4 is a diagram showing the general concept of a load distribution performed by the mobile communication system according to the first exemplary embodiment;
Fig. 5 is a sequence diagram showing an operation of an UE at the time of starting a service in the mobile communication system according to the first exemplary embodiment;
Fig. 6 is a flowchart showing an operation sequence of the RNC according to the first exemplary embodiment for a load distribution control process;
Fig. 7 is a flowchart showing a processing sequence for a conversational service according to the first exemplary embodiment;
Fig. 8 is a flowchart showing a processing sequence for a streaming service according to the first exemplary embodiment;
Fig. 9 is a flowchart showing a processing sequence for an interactive service according to the first exemplary embodiment;
Fig. 10 is a flowchart showing a processing sequence for a background service according to the first exemplary embodiment;
Fig. 11 is a flowchart showing a processing sequence for a signalling service according to the first exemplary embodiment;
Fig. 12 is a diagram showing the general concept of a load distribution performed by a mobile communication system according to a second exemplary embodiment;
Fig. 13 is a sequence diagram showing an operation of an UE at the time of starting a service in the mobile communication system according to the second exemplary embodiment;
Fig. 14 is a flowchart showing a processing sequence for a conversational service according to the second exemplary embodiment;
Fig. 15 is a flowchart showing a processing sequence for a streaming service according to the second exemplary embodiment;
Fig. 16 is a flowchart showing a processing sequence for an interactive service according to the second exemplary embodiment;
Fig. 17 is a flowchart showing a processing sequence for a background service according to the second exemplary embodiment; and
Fig. 18 is a flowchart showing a processing sequence for a signalling service according to the second exemplary embodiment.

### Best mode for carrying out the invention:

Exemplary embodiments of the present invention will be described in detail below with reference to the drawings.

### (1st exemplary embodiment)

A mobile communication system illustrated below employs a CMDA (Code Division Multiple Access) process as a wireless access process, and provides a plurality of services. The types of the services include a conversational service, a streaming service, an interactive service, a background service, and a signalling service.
The conversational service is typified by voice communications and video distributions. The streaming service is used for streaming music and images. The interactive service is typified by Web browsing. The background service is used to distribute mails. The signalling service is used for short messages and positional registration. A mobile equipment (UE) requests the mobile communication system for a service to be started as an establishment cause.

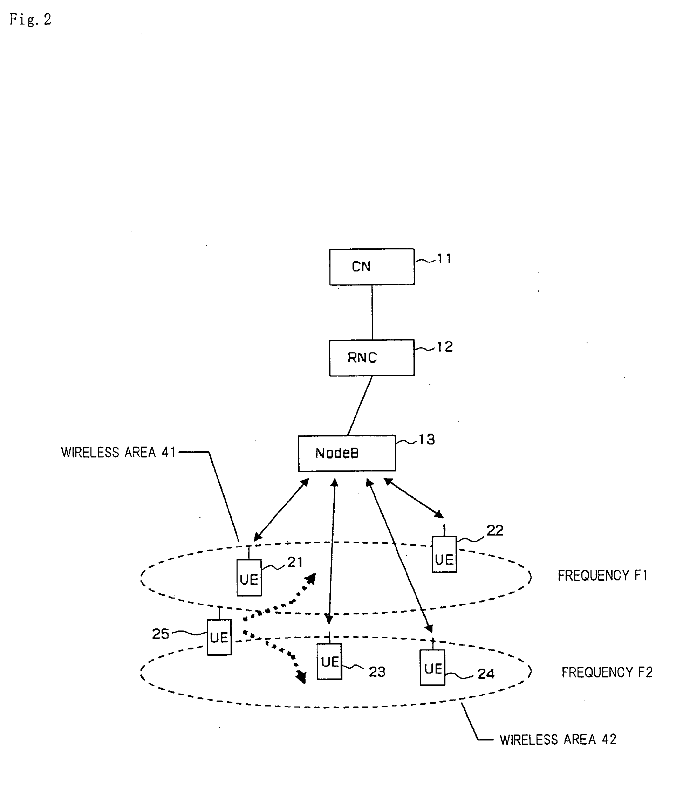

Fig. 2 is a block diagram showing the configuration of a mobile communication system according to a first exemplary embodiment. As shown in Fig. 2, the mobile communication system includes a switching system (CN: Core Network) 11, a wireless network controller (RNC: Radio Network Controller) 12, and a wireless base station apparatus (NodeB) 13.

Though CN 11, RNC 12, and NodeB 13 are shown one for each, they are usually provided as plural for each.

CNs 11 are connected to each other for switching operation.

Each RNC 12 is connected to either one of CNs 11 and accommodates a plurality of NodeBs 13. RNC 12 processes calls made through NodeBs 13 accommodated thereby and control wireless resources of each of NodeBs 13.

Each NodeB 13 is connected to either one of RNCs 12 and is connected to mobile equipments (UE) through wireless links. Under the control of RNC 12, NodeB 13 provides wireless resources to each UE. NodeB 13 provides a plurality of wireless areas having different frequencies. RNC 12 indicates, to NodeB 13, which wireless area is to assign resources to UE. NodeB13 provides the resources of the wireless area indicated by RNC 12 to UE. Though an example in which loads are distributed on wireless areas having different frequencies will be illustrated below, the present invention is not limited to such an example. The present invention is applicable to wireless areas over which loads can be distributed, and is not limited to the frequencies.

In the example shown in Fig. 2, NodeB 13 provides wireless area 41 having frequency F1 and wireless area 42 having frequency F2. In Fig. 2, UE 21 and UE 22 are shown as being connected to wireless area 41, and UE23, UE 24 are shown as being connected to wireless area 42, with UE 25 newly requesting a new connection.

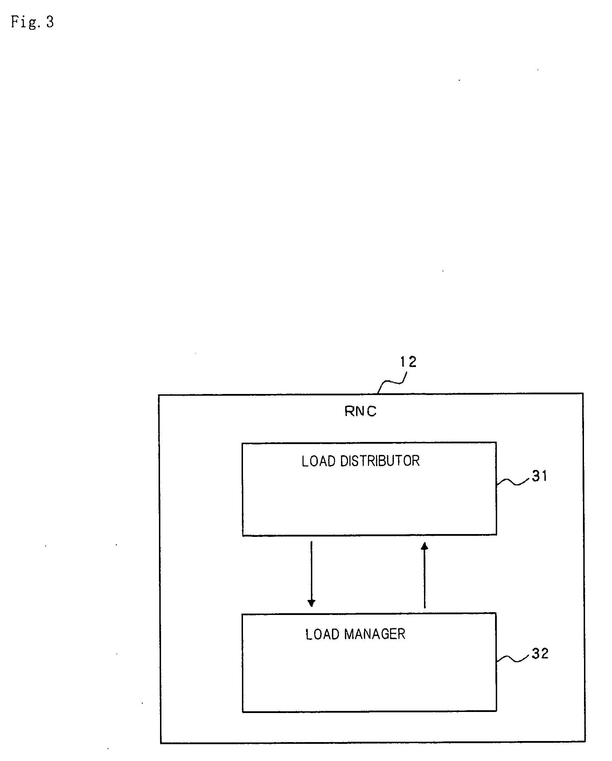

Fig. 3 is a block diagram of the configuration of the RNC. As shown in Fig. 3, RNC 12 includes load distributor 31 and load manager 32.

Load manager 32 manages the load statuses of wireless areas 41, 42 that are covered by NodeB 13. The load statuses include loads imposed on respective wireless areas 41, 42. In response to a request from load distributor 31, load manager 32 indicates the present load statuses of the respective wireless areas to load distributor 31.

Based on the load statuses managed by load manager 32, load distributor 31 distributes the loads on wireless areas 41, 42. When load distributor 31 selects a wireless area to be assigned to UE 25 which has requested a connection for a new service, load distributor 31 uses the remaining resources of the wireless areas for judgement. When load distributor 31 uses the remaining resources for judgement, load distributor 31 judges based on thresholds of the remaining resources which differ from service to service. The thresholds are held by load distributor 31. When load distributor 31 selects a wireless area to be assigned to new UE 25, load distributor 31 also uses the information of the service requested by UE 25 for judgement. Specifically, the above thresholds are determined for the respective types of services, and load distributor 31 judges using the threshold for the requested service.

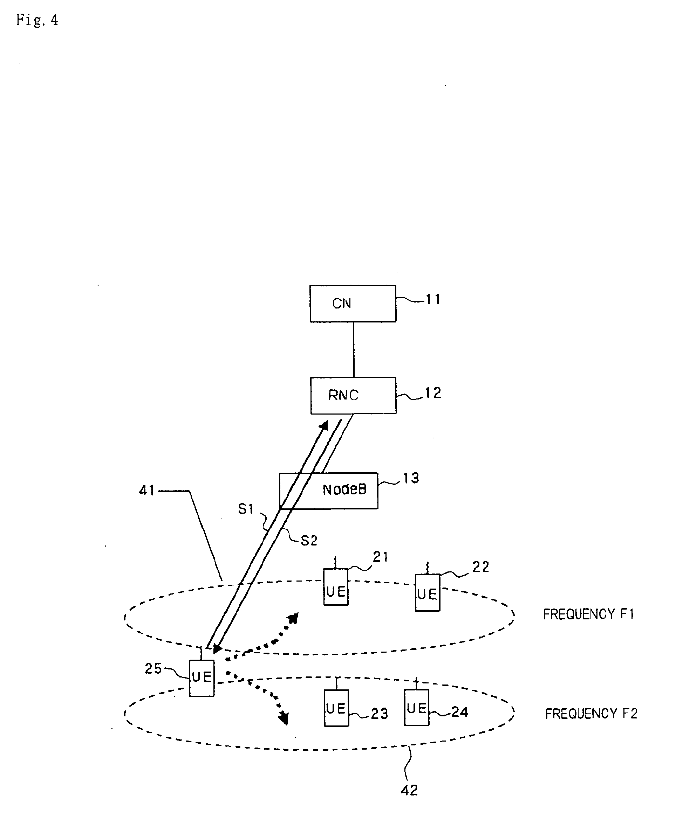

Fig. 4 is a diagram showing the general concept of a load distribution performed by the mobile communication system according to the first exemplary embodiment.

As shown in Fig. 4, UE 25 which is to receive a new service sends service start request S1 to RNC 12 of the mobile communication system.

Upon receipt of service start request S1, RNC 12 selects a wireless area suitable for establishing a connection to UE 25 from wireless areas 41, 42 that are managed by itself. At this time, load distributor 31 of RNC 12 is triggered by service start request S1 to confirm the load statuses managed by load manager 32.

For confirming the load statuses, load distributor 31 requests load manager 32 for information about the present load statuses, as shown in Fig. 3. In response to the request from load distributor 31, load manager 32 indicates the loads on wireless areas 41, 42 to load distributor 31. Based on the loads indicated by load manager 32, load distributor 31 selects an optimum wireless area.

Referring back to Fig. 4, RNC 11 indicates information S1 about the wireless area selected by load distribution device 111 to UE 25, indicating that the service can be started in the wireless area. UE 25 then establishes a call between itself and RNC 12.

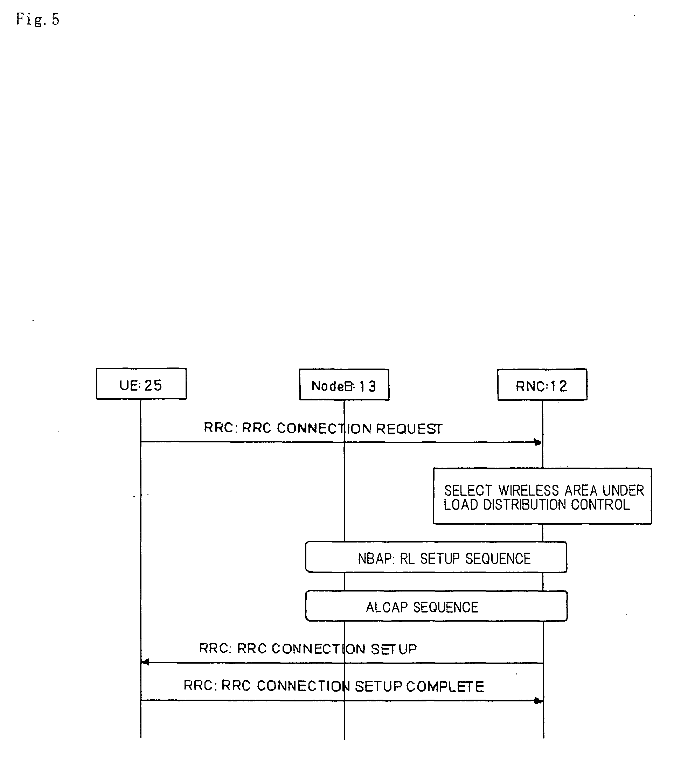

Fig. 5 is a sequence diagram showing an operation of an UE at the time of starting a service in the mobile communication system according to the first exemplary embodiment. As shown in Fig. 5, UE 25 which is to receive a new service sends an RRC: RRC CONNECTION REQUEST message to RNC 12. This message contains information about the contents of the requested service as an establishment cause parameter.

RNC 12 performs a load distribution process using the establishment cause parameter indicated from UE 25 and the load statuses managed by load manager 32.

After having selected a wireless area according to the load distribution process, RNC 12 performs a process of establishing an RL (Radio Link) and a process of establishing an ALCP between itself and NodeB 21 in order to establish a call in the wireless area.

Thereafter, RNC 12 sends an RRC: RRCC CONNECTION SETUP message to UE 25, indicating the wireless area to UE 25.

When UE 25 has received the RRC: RRCC CONNECTION SETUP message, it sends back an RRC: RRCC CONNECTION COMPLETE message to RNC 12, indicating that the establishment of a call in the wireless area is completed.

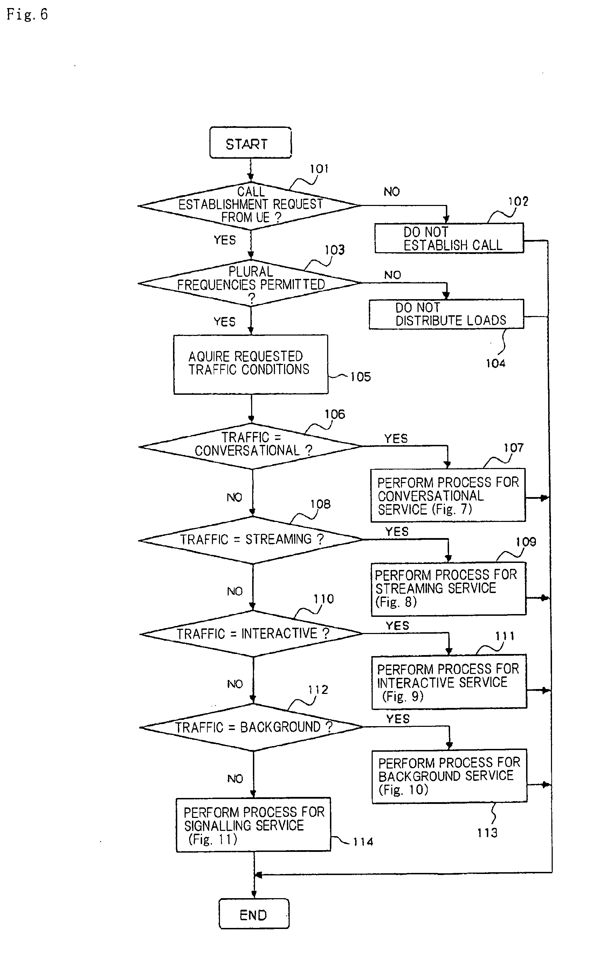

Fig. 6 is a flowchart showing an operation sequence of the RNC according to the first exemplary embodiment for a load distribution control process. As shown in Fig. 6, RNC 12 determines whether there is a call establishing request from UE 25 or not (step 101). If there is no call establishing request, then RNC 12 does not establish a call and puts the process to an end (step 102).

If there is a call establishing request, then RNC 12 determines whether wireless areas with a plurality of frequencies are permitted or not (step 103). If NodeB 13 managed by RNC 12 provides wireless areas with a plurality of frequencies, then a plurality of wireless areas are permitted.

If a plurality of wireless areas are not permitted, then RNC 12 does not distribute loads and puts the process to an end (step 104).

If a plurality of wireless areas are permitted, then RNC 12 acquires requested service contents (traffic conditions) from the establishment clause parameter contained in the RRC: RRC CONNECTION REQUEST message from UE 25 (step 105), and performs a load distribution control process with respect to the service contents.

According to the load distribution control process depending on each of the service contents, RNC 12 determines whether the service contents (traffic conditions) represent a conversational service or not (step 106). If the service contents (traffic conditions) represent a conversational service, then RNC 12 performs a process for the conversational service (step 107). Details of the process for the conversational service will be described later.

If the service contents (traffic conditions) do not represent a conversational service, then RNC 12 determines whether the service contents (traffic conditions) represent a streaming service or not (step 108). If the service contents (traffic conditions) represent a streaming service, then RNC 12 performs a process for the streaming service (step 109). Details of the process for the streaming service will be described later.

If the service contents (traffic conditions) do not represent a streaming service, then RNC 12 determines whether the service contents (traffic conditions) represent an interactive service or not (step 110). If the service contents (traffic conditions) represent an interactive service, then RNC 12 performs a process for the interactive service (step 111). Details of the process for the interactive service will be described later.

If the service contents (traffic conditions) do not represent an interactive service, then RNC 12 determines whether the service contents (traffic conditions) represent a background service or not (step 112). If the service contents (traffic conditions) represent a background service, then RNC 12 performs a process for the background service (step 113). Details of the process for the background service will be described later.

If the service contents (traffic conditions) do not represent a background service, then RNC 12 performs a process for a signalling service (step 114). Details of the process for the signalling service will be described later.

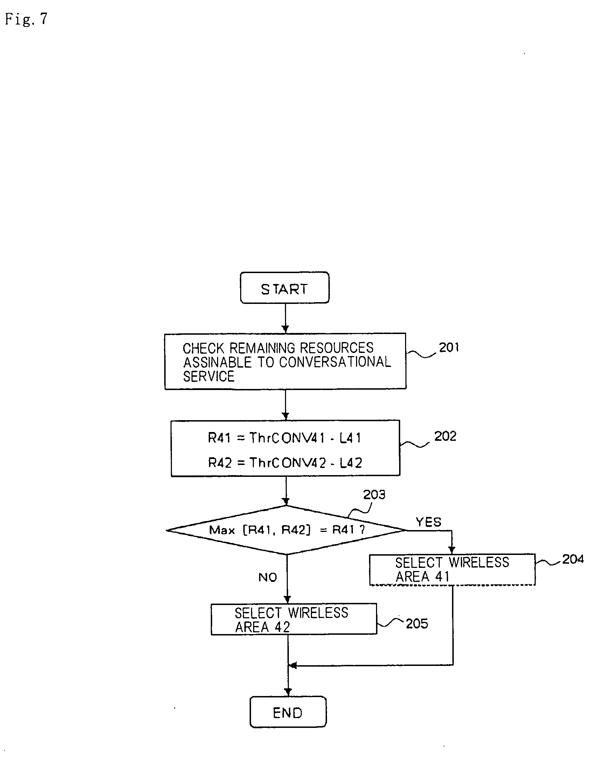

Fig. 7 is a flowchart showing a processing sequence for the conversational service according to the first exemplary embodiment. As shown in Fig. 7, RNC 12 checks the remaining resources of the wireless areas based on the thresholds for loads that permit the conversational service in wireless areas 41, 42 and the present loads imposed on wireless areas 41, 42 (step 201), and calculates the remaining resources (step 202).

If it is assumed that the threshold for a load that permits the conversational service in wireless area 41 is represented by ThrCONV41 and the present load on wireless area 41 by L41, then remaining resources R41 of wireless area 41 are expressed as R41 = ThrCONV41 - L41.

Similarly, if it is assumed that the threshold for a load that permits the conversational service in wireless area 42 is represented by ThrCONV42 and the present load on wireless area 42 by L42, then remaining resources R42 of wireless area 42 are expressed as R42 = ThrCONV42 - L42.

Then, in order to check which one of R41, R42 is greater, RNC 12 determines whether a greatest one of R41, R42 is equal to R41 or not (step 203).

If a greatest one of R41, R42 is equal to R41, then since R41 is equal to or greater than R42, i.e., since the remaining resources of wireless area 41 are equal to or greater than the remaining resources of wireless area 42, RNC 12 selects wireless area 41 (step 204).

If a greatest one of R41, R42 is not equal to R41, then since R41 is smaller than R42, i.e., since the remaining resources of wireless area 42 are greater than the remaining resources of wireless area 41, RNC 12 selects wireless area 42 (step 205).

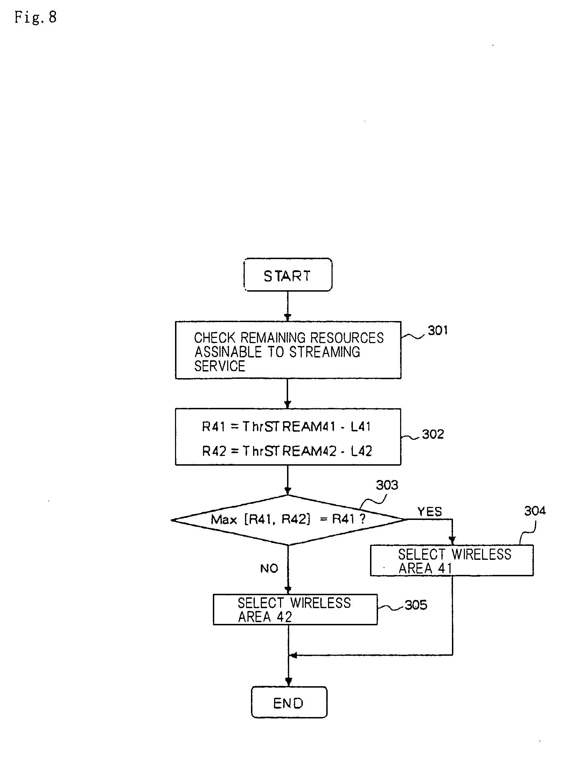

Fig. 8 is a flowchart showing a processing sequence for the streaming service according to the first exemplary embodiment. As shown in Fig. 8, RNC 12 checks the remaining resources of the wireless areas based on the thresholds for loads that permit the streaming service in wireless areas 41, 42 and the present loads imposed on wireless areas 41, 42 (step 301), and calculates the remaining resources (step 302).

If it is assumed that the threshold for a load that permits the streaming service in wireless area 41 is represented by ThrSTREAM41 and the present load on wireless area 41 by L41, then remaining resources R41 of wireless area 41 are expressed as R41 = ThrSTREAM41 - L41.

Similarly, if it is assumed that the threshold for a load that permits the streaming service in wireless area 42 is represented by ThrSTREAM42 and the present load on wireless area 42 by L42, then remaining resources R42 of wireless area 42 are expressed as R42 = ThrSTREAM42 - L42.

Then, in order to check which one of R41, R42 is greater, RNC 12 determines whether a greatest one of R41, R42 is equal to R41 or not (step 303).

If a greatest one of R41, R42 is equal to R41, then since R41 is equal to or greater than R42, i.e., since the remaining resources of wireless area 41 are equal to or greater than the remaining resources of wireless area 42, RNC 12 selects wireless area 41 (step 304).

If a greatest one of R41, R42 is not equal to R41, then since R41 is smaller than R42, i.e., since the remaining resources of wireless area 42 are greater than the remaining resources of wireless area 41, RNC 12 selects wireless area 42 (step 305).

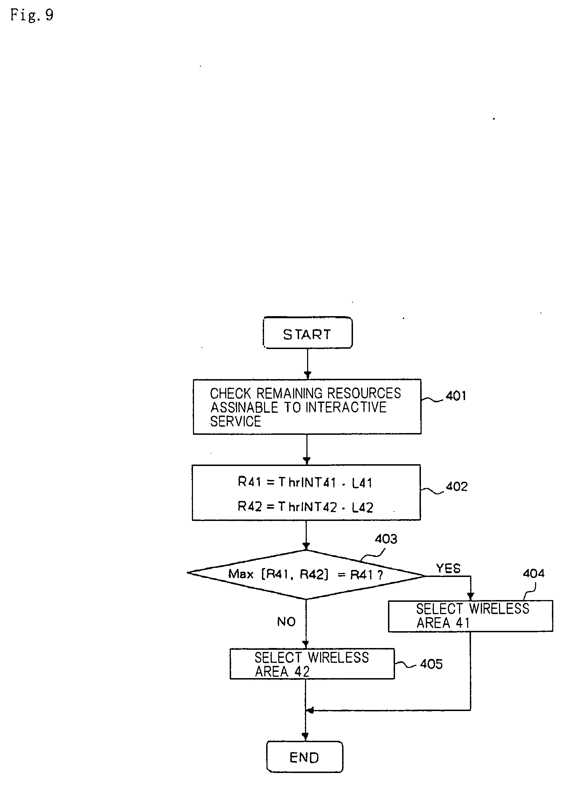

Fig. 9 is a flowchart showing a processing sequence for the interactive service according to the first exemplary embodiment. As shown in Fig. 7, RNC 12 checks the remaining resources of the wireless areas based on the thresholds for loads that permit the interactive service in wireless areas 41, 42 and the present loads imposed on wireless areas 41, 42 (step 401), and calculates the remaining resources (step 402).

If it is assumed that the threshold for a load that permits the interactive service in wireless area 41 is represented by ThrINT41 and the present load on wireless area 41 by L41, then remaining resources R41 of wireless area 41 are expressed as R41 = ThrINT41 - L41.

Similarly, if it is assumed that the threshold for a load that permits the interactive service in wireless area 42 is represented by ThrINT42 and the present load on wireless area 42 by L42, then remaining resources R42 of wireless area 42 are expressed as R42 = ThrINT42 - L42.

Then, in order to check which one of R41, R42 is greater, RNC 12 determines whether a greatest one of R41, R42 is equal to R41 or not (step 403).

If a greatest one of R41, R42 is equal to R41, then since R41 is equal to or greater than R42, i.e., since the remaining resources of wireless area 41 are equal to or greater than the remaining resources of wireless area 42, RNC 12 selects wireless area 41 (step 404).

If a greatest one of R41, R42 is not equal to R41, then since R41 is smaller than R42, i.e., since the remaining resources of wireless area 42 are greater than the remaining resources of wireless area 41, RNC 12 selects wireless area 42 (step 405).

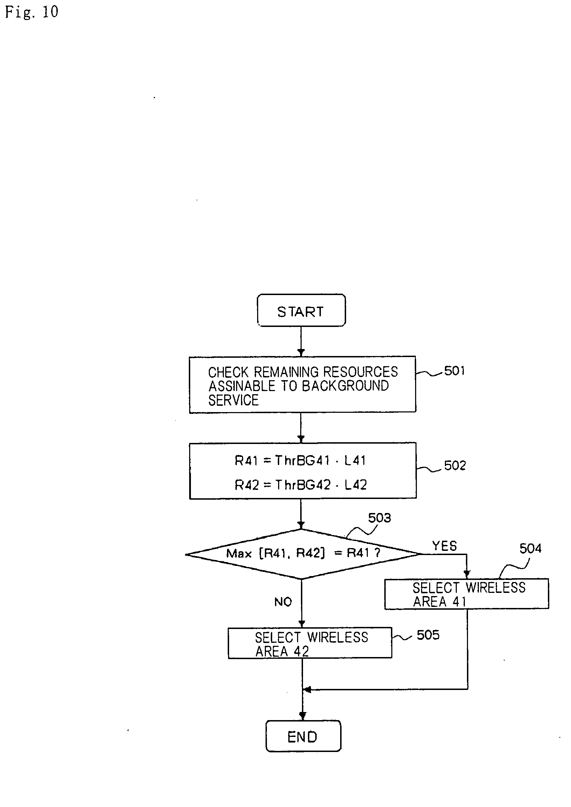

Fig. 10 is a flowchart showing a processing sequence for the background service according to the first exemplary embodiment. As shown in Fig. 10, RNC 12 checks the remaining resources of the wireless areas based on the thresholds for loads that permit the background service in wireless areas 41, 42 and the present loads imposed on wireless areas 41, 42 (step 501), and calculates the remaining resources (step 502).

If it is assumed that the threshold for a load that permits the background service in wireless area 41 is represented by ThrBG41 and the present load on wireless area 41 by L41, then remaining resources R41 of wireless area 41 are expressed as R41 = ThrBG41 - L41.

Similarly, if it is assumed that the threshold for a load that permits the background service in wireless area 42 is represented by ThrBG42 and the present load on wireless area 42 by L42, then remaining resources R42 of wireless area 42 are expressed as R42 = ThrBG42 - L42.

Then, in order to check which one of R41, R42 is greater, RNC 12 determines whether a greatest one of R41, R42 is equal to R41 or not (step 503).

If a greatest one of R41, R42 is equal to R41, then since R41 is equal to or greater than R42, i.e., since the remaining resources of wireless area 41 are equal to or greater than the remaining resources of wireless area 42, RNC 12 selects wireless area 41 (step 504).

If a greatest one of R41, R42 is not equal to R41, then since R41 is smaller than R42, i.e., since the remaining resources of wireless area 42 are greater than the remaining resources of wireless area 41, RNC 12 selects wireless area 42 (step 505).

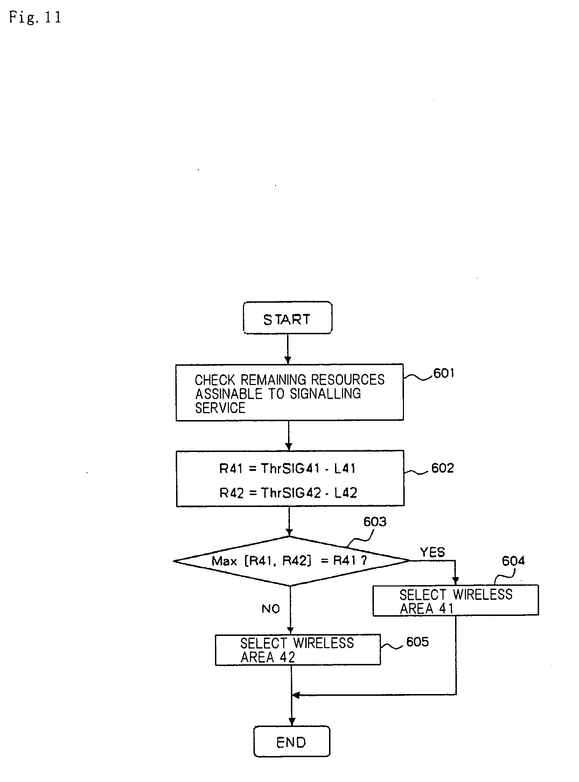

Fig. 11 is a flowchart showing a processing sequence for the signalling service according to the first exemplary embodiment. As shown in Fig. 11, RNC 12 checks the remaining resources of the wireless areas based on the thresholds for loads that permit the signalling service in wireless areas 41, 42 and the present loads imposed on wireless areas 41, 42 (step 601), and calculates the remaining resources (step 602).

If it is assumed that the threshold for a load that permits the signalling service in wireless area 41 is represented by ThrSIG41 and the present load on wireless area 41 by L41, then remaining resources R41 of wireless area 41 are expressed as R41 = ThrSIG41 - L41.

Similarly, if it is assumed that the threshold for a load that permits the signalling service in wireless area 42 is represented by ThrSIG42 and the present load on wireless area 42 by L42, then remaining resources R42 of wireless area 42 are expressed as R42 = ThrSIG42 - L42.

Then, in order to check which one of R41, R42 is greater, RNC 12 determines whether a greatest one of R41, R42 is equal to R41 or not (step 603).

If a greatest one of R41, R42 is equal to R41, then since R41 is equal to or greater than R42, i.e., since the remaining resources of wireless area 41 are equal to or greater than the remaining resources of wireless area 42, RNC 12 selects wireless area 41 (step 604).

If a greatest one of R41, R42 is not equal to R41, then since R41 is smaller than R42, i.e., since the remaining resources of wireless area 42 are greater than the remaining resources of wireless area 41, RNC 12 selects wireless area 42 (step 605).

According to the present exemplary embodiment, as described above, when RNC 12 accommodating NodeB 13 that provides a plurality of wireless areas assigns wireless resources upon a request from new UE 25, RNC 12 selects a wireless area based on the remaining resources of the wireless areas. Therefore, when the total capacities of the respective wireless areas are different from each other, RNC 12 can select a wireless area according to the appropriate load distribution process.

According to the present exemplary embodiment, furthermore, when RNC 12 accommodating NodeB 13 that provides a plurality of wireless areas assigns wireless resources to new UE 25, RNC 12 selects a wireless area based on the type of a service requested by UE 25. Therefore, when the properties of respective services are different from each other, RNC 12 can select a wireless area according to the appropriate load distribution process.

### (2nd exemplary embodiment)

The first exemplary embodiment has illustrated the example in which a UE requests the mobile communication system for a service. According to a second exemplary embodiment, an example in which a CN requests the mobile communication system for a service will be illustrated. In the example according to the second exemplary embodiment, there are three wireless areas.

A Configuration of a mobile communication system according to the second exemplary embodiment is the same as the configuration of the system according to the first embodiment shown in Fig. 2. A Configuration of RNC 12 according to the second exemplary embodiment is the same as the configuration of RNC 12 according to the first embodiment shown in Fig. 3.

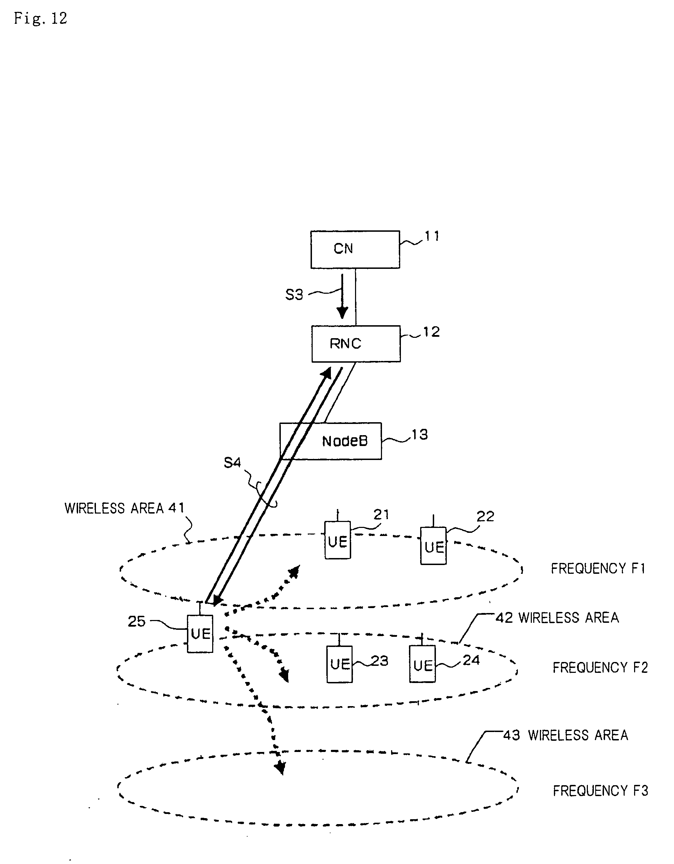

Fig. 12 is a diagram showing the general concept of a load distribution performed by the mobile communication system according to the second exemplary embodiment.

As shown in Fig. 12, CN 11 sends service start request S3 to RNC 12 of the mobile communication system. Upon receipt of service start request S3, RNC 12 selects a wireless area suitable for a load distribution base on the load statuses in the respective wireless areas. Then, a call establishment process (S4) is performed between RNC 12 and UE 25.

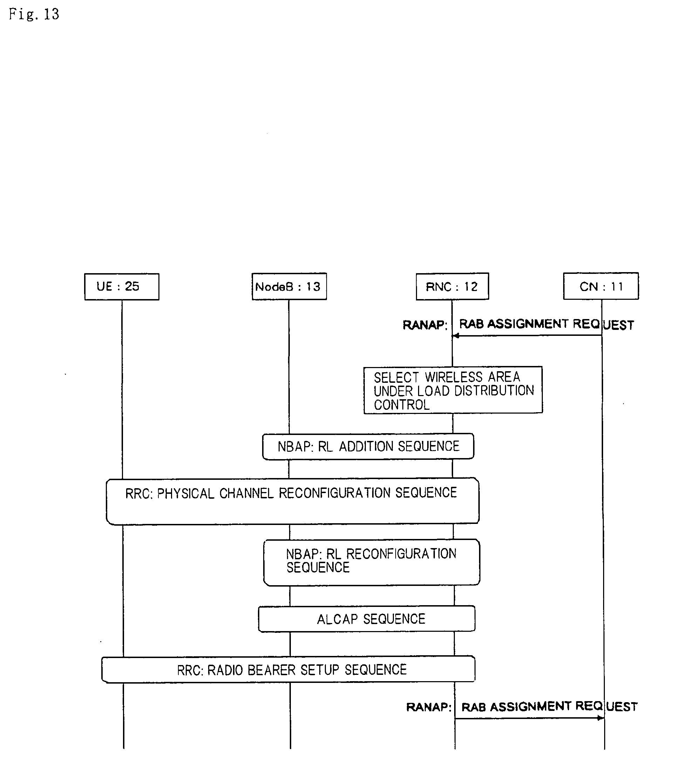

Fig. 13 is a sequence diagram showing an operation of an UE at the time of starting a service in the mobile communication system according to the second exemplary embodiment. As shown in Fig. 13, CN 11 which is to request a service sends an RANAP: RAB ASSIGNMENT REQUEST message to RNC 12. This message contains service information (RAB parameter).

RNC 12 performs a load distribution control process to select an appropriate wireless area based on the RAB parameter indicated by CN 51 and the load statuses managed by load manager 32.

If the wireless area in which UE 25 has established a call and the wireless area selected by RNC 12 are different from each other, then it is necessary to change the wireless area whose wireless resources are to be assigned to UE 25. To change the wireless area, a sequence for adding RL (NBAP: RL Addition sequence) is performed between RNC 12 and UE 25. Furthermore, an RRC: PHYSICAL CHANNEL RECONFIGURATION sequence is performed between RNC 12 and UE 25 to switch UE 25 to the wireless area selected by RNC 12.

Thereafter, in order to establish the service requested by CN 11, RNC 12 performs an NBAP: RL Reconfiguration sequence and an ALCAP sequence between itself and NodeB 13. RNC 12 also performs an RRC: RADIO BEARER SETUP sequence between itself and UE 25.

Then, RNC 12 sends an RANAP: RAB ASSIGNMENT RESPONSE message to CN 11, indicating that the establishment of the service is completed.

Operation of RNC 12 for the load distribution control process according to the second exemplary embodiment is the same as the operation according to the first exemplary embodiment shown in Fig. 6. However, whereas RNC 12 is triggered by a call establishment request from UE 25 to start operating for the load distribution in Fig. 6, RNC 12 starts operating for the load distribution based on a request from CN 11 according to the second exemplary embodiment.

The load distribution control process performed with respect to service contents by RNC 12 according to the second exemplary embodiment is basically the same as the load distribution control process according to the first exemplary embodiment. However, there are some differences because of the three wireless areas. Traffic information is indicated from UE 25 or CN 11 according to a sequence.

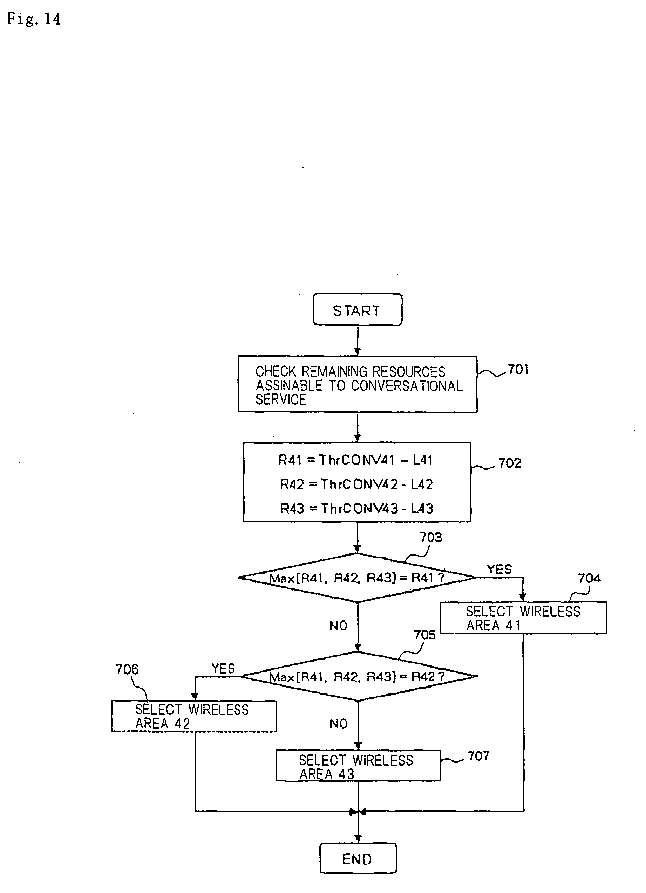

Fig. 14 is a flowchart showing a processing sequence for a conversational service according to the second exemplary embodiment. As shown in Fig. 14, RNC 12 checks the remaining resources of the wireless areas based on the thresholds for loads that permit the conversational service in wireless areas 41, 42, 43 and the present loads imposed on wireless areas 41, 42, 43 (step 701), and calculates the remaining resources (step 702).

If it is assumed that the threshold for a load that permits the conversational service in wireless area 41 is represented by ThrCONV41 and the present load on wireless area 41 by L41, then remaining resources R41 of wireless area 41 are expressed as R41 = ThrCONV41 - L41.

Similarly, if it is assumed that the threshold for a load that permits the conversational service in wireless area 42 is represented by ThrCONV42 and the present load on wireless area 42 by L42, then remaining resources R42 of wireless area 42 are expressed as R42 = ThrCONV42 - L42.

Similarly, if it is assumed that the threshold for a load that permits the conversational service in wireless area 43 is represented by ThrCONV43 and the present load on wireless area 43 by L43, then remaining resources R43 of wireless area 43 are expressed as R43 = ThrCONV43 - L43.

Then, in order to check which one of R41, R42, R43 is the greatest, RNC 12 determines whether a greatest one of R41, R42, R43 is equal to R41 or not (step 703).

If a greatest one of R41, R42, R43 is equal to R41, then since remaining resources R41 of wireless area are the greatest, RNC 12 selects wireless area 41 (step 704).

If a greatest one of R41, R42, R43 is not equal to R41, then RNC 12 determines whether a greatest one of R41, R42, R43 is equal to R42 or not (step 705).

If a greatest one of R41, R42, R43 is equal to R42, then since remaining resources R42 of wireless area 42 are the greatest, RNC 12 selects wireless area 42 (step 706).

If a greatest one of R41, R42, R43 is not equal to R42, then since remaining resources R43 of wireless area 43 are the greatest, RNC 12 selects wireless area 43 (step 707).

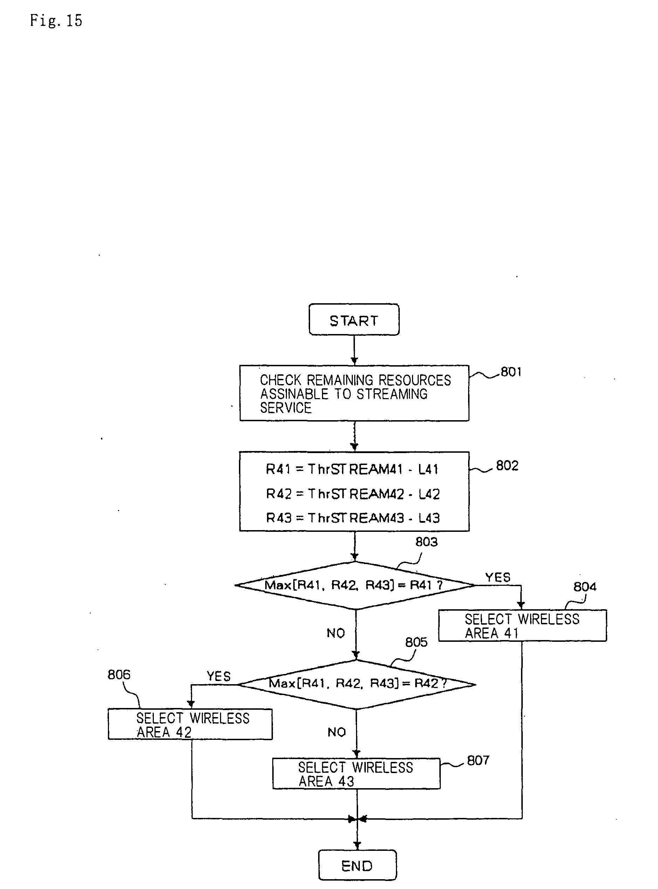

Fig. 15 is a flowchart showing a processing sequence for a streaming service according to the second exemplary embodiment. As shown in Fig. 15, RNC 12 checks the remaining resources of the wireless areas based on the thresholds for loads that permit the streaming service in wireless areas 41, 42, 43 and the present loads imposed on wireless areas 41, 42, 43 (step 801), and calculates the remaining resources (step 802).

If it is assumed that the threshold for a load that permits the streaming service in wireless area 41 is represented by ThrSTREAM41 and the present load on wireless area 41 by L41, then remaining resources R41 of wireless area 41 are expressed as R41 = ThrSTREAM41 - L41.

Similarly, if it is assumed that the threshold for a load that permits the streaming service in wireless area 42 is represented by ThrSTREAM42 and the present load on wireless area 42 by L42, then remaining resources R42 of wireless area 42 are expressed as R42 = ThrSTREAM42 - L42.

Similarly, if it is assumed that the threshold for a load that permits the streaming service in wireless area 43 is represented by ThrSTREAM43 and the present load on wireless area 43 by L43, then remaining resources R43 of wireless area 43 are expressed as R43 = ThrSTREAM43 - L43.

Then, in order to check which one of R41, R42, R43 is the greatest, RNC 12 determines whether a greatest one of R41, R42, R43 is equal to R41 or not (step 803).

If a greatest one of R41, R42, R43 is equal to R41, then since remaining resources R41 of wireless area are the greatest, RNC 12 selects wireless area 41 (step 804).

If a greatest one of R41, R42, R43 is not equal to R41, then RNC 12 determines whether a greatest one of R41, R42, R43 is equal to R42 or not (step 805).

If a greatest one of R41, R42, R43 is equal to R42, then since remaining resources R42 of wireless area 42 are the greatest, RNC 12 selects wireless area 42 (step 806).

If a greatest one of R41, R42, R43 is not equal to R42, then since remaining resources R43 of wireless area 43 are the greatest, RNC 12 selects wireless area 43 (step 807).

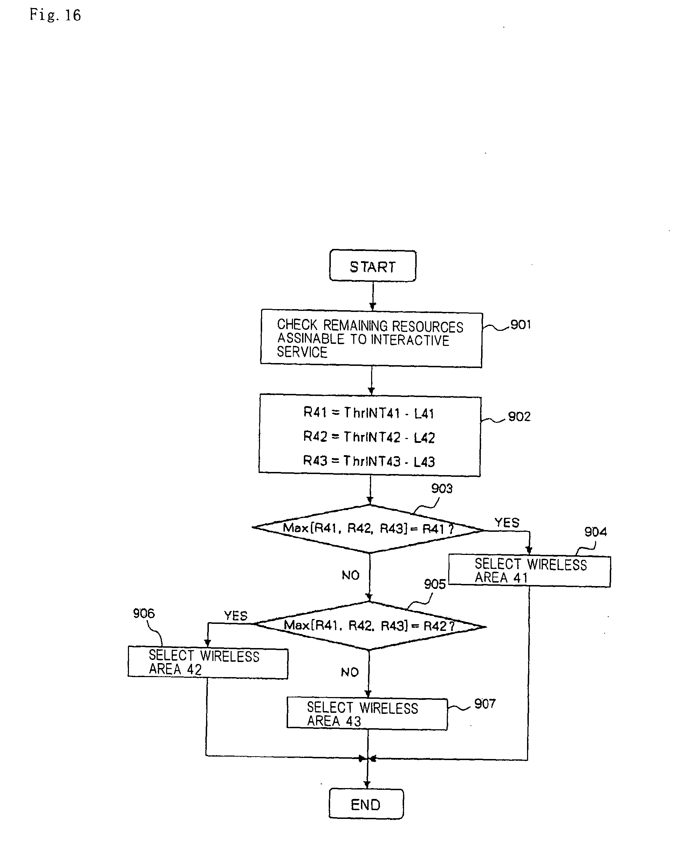

Fig. 16 is a flowchart showing a processing sequence for an interactive service according to the second exemplary embodiment. As shown in Fig. 16, RNC 12 checks the remaining resources of the wireless areas based on the thresholds for loads that permit the interactive service in wireless areas 41, 42, 43 and the present loads imposed on wireless areas 41, 42, 43 (step 901), and calculates the remaining resources (step 902).

If it is assumed that the threshold for a load that permits the interactive service in wireless area 41 is represented by ThrINT41 and the present load on wireless area 41 by L41, then remaining resources R41 of wireless area 41 are expressed as R41 = ThrINT41 - L41.

Similarly, if it is assumed that the threshold for a load that permits the interactive service in wireless area 42 is represented by ThrINT42 and the present load on wireless area 42 by L42, then remaining resources R42 of wireless area 42 are expressed as R42 = ThrINT42 - L42.

Similarly, if it is assumed that the threshold for a load that permits the interactive service in wireless area 43 is represented by ThrINT43 and the present load on wireless area 43 by L43, then remaining resources R43 of wireless area 43 are expressed as R43 = ThrINT43 - L43.

Then, in order to check which one of R41, R42, R43 is the greatest, RNC 12 determines whether a greatest one of R41, R42, R43 is equal to R41 or not (step 903).

If a greatest one of R41, R42, R43 is equal to R41, then since remaining resources R41 of wireless area are the greatest, RNC 12 selects wireless area 41 (step 904).

If a greatest one of R41, R42, R43 is not equal to R41, then RNC 12 determines whether a greatest one of R41, R42, R43 is equal to R42 or not (step 905).

If a greatest one of R41, R42, R43 is equal to R42, then since remaining resources R42 of wireless area 42 are the greatest, RNC 12 selects wireless area 42 (step 906).

If a greatest one of R41, R42, R43 is not equal to R42, then since remaining resources R43 of wireless area 43 are the greatest, RNC 12 selects wireless area 43 (step 907).

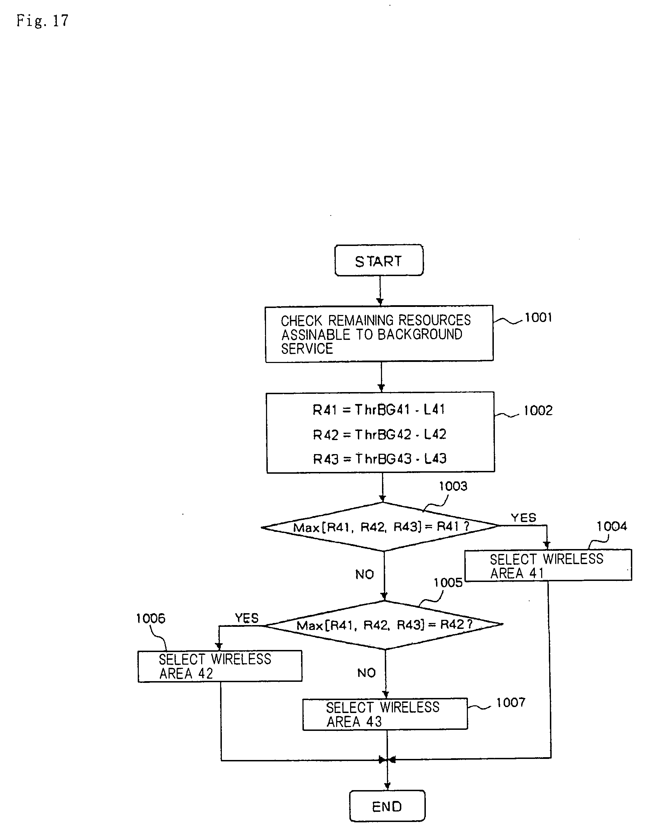

Fig. 17 is a flowchart showing a processing sequence for a background service according to the second exemplary embodiment. As shown in Fig. 16, RNC 12 checks the remaining resources of the wireless areas based on the thresholds for loads that permit the background service in wireless areas 41, 42, 43 and the present loads imposed on wireless areas 41, 42, 43 (step 1001), and calculates the remaining resources (step 1002).

If it is assumed that the threshold for a load that permits the background service in wireless area 41 is represented by ThrBG41 and the present load on wireless area 41 by L41, then remaining resources R41 of wireless area 41 are expressed as R41 = ThrBG41 - L41.

Similarly, if it is assumed that the threshold for a load that permits the background service in wireless area 42 is represented by ThrBG42 and the present load on wireless area 42 by L42, then remaining resources R42 of wireless area 42 are expressed as R42 = ThrBG42 - L42.

Similarly, if it is assumed that the threshold for a load that permits the background service in wireless area 43 is represented by ThrBG43 and the present load on wireless area 43 by L43, then remaining resources R43 of wireless area 43 are expressed as R43 = ThrBG43 - L43.

Then, in order to check which one of R41, R42, R43 is the greatest, RNC 12 determines whether a greatest one of R41, R42, R43 is equal to R41 or not (step 1003).

If a greatest one of R41, R42, R43 is equal to R41, then since remaining resources R41 of wireless area are the greatest, RNC 12 selects wireless area 41 (step 1004).

If a greatest one of R41, R42, R43 is not equal to R41, then RNC 12 determines whether a greatest one of R41, R42, R43 is equal to R42 or not (step 1005).

If a greatest one of R41, R42, R43 is equal to R42, then since remaining resources R42 of wireless area 42 are the greatest, RNC 12 selects wireless area 42 (step 1006).

If a greatest one of R41, R42, R43 is not equal to R42, then since remaining resources R43 of wireless area 43 are the greatest, RNC 12 selects wireless area 43 (step 1007).

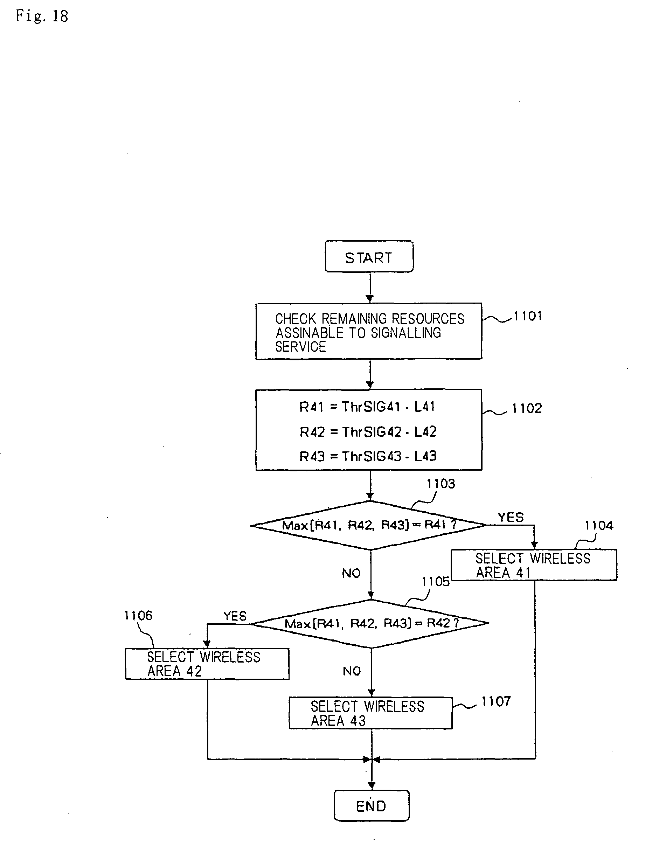

Fig. 18 is a flowchart showing a processing sequence for a signalling service according to the second exemplary embodiment. As shown in Fig. 18, RNC 12 checks the remaining resources of the wireless areas based on the thresholds for loads that permit the signalling service in wireless areas 41, 42, 43 and the present loads imposed on wireless areas 41, 42, 43 (step 1101), and calculates the remaining resources (step 1102).

If it is assumed that the threshold for a load that permits the signalling service in wireless area 41 is represented by ThrSIG41 and the present load on wireless area 41 by L41, then remaining resources R41 of wireless area 41 are expressed as R41 = ThrSIG41 - L41.

Similarly, if it is assumed that the threshold for a load that permits the signalling service in wireless area 42 is represented by ThrSIG42 and the present load on wireless area 42 by L42, then remaining resources R42 of wireless area 42 are expressed as R42 = ThrSIG42 - L42.

Similarly, if it is assumed that the threshold for a load that permits the signalling service in wireless area 43 is represented by ThrSIG43 and the present load on wireless area 43 by L43, then remaining resources R43 of wireless area 43 are expressed as R43 = ThrSIG43 - L43.

Then, in order to check which one of R41, R42, R43 is the greatest, RNC 12 determines whether a greatest one of R41, R42, R43 is equal to R41 or not (step 1103).

If a greatest one of R41, R42, R43 is equal to R41, then since remaining resources R41 of wireless area are the greatest, RNC 12 selects wireless area 41 (step 1104).

If a greatest one of R41, R42, R43 is not equal to R41, then RNC 12 determines whether a greatest one of R41, R42, R43 is equal to R42 or not (step 1105).

If a greatest one of R41, R42, R43 is equal to R42, then since remaining resources R42 of wireless area 42 are the greatest, RNC 12 selects wireless area 42 (step 1106).

If a greatest one of R41, R42, R43 is not equal to R42, then since remaining resources R43 of wireless area 43 are the greatest, RNC 12 selects wireless area 43 (step 1107).

According to the present exemplary embodiment, as described above, when RNC 12 accommodating NodeB 13 that provides a plurality of wireless areas assigns wireless resources to UE 25 upon a request from CN 11, RNC 12 selects a wireless area based on the remaining resources of the wireless areas. Therefore, when the total capacities of the respective wireless areas are different from each other, RNC 12 can select a wireless area according to the appropriate load distribution process.

According to the present exemplary embodiment, furthermore, when RNC 12 accommodating NodeB 13 that provides a plurality of wireless areas assigns wireless resources to new UE 25, RNC 12 selects a wireless area based on the type of a service requested by UE 25. Therefore, when the properties of respective services are different from each other, RNC 12 can select a wireless area according to the appropriate load distribution process.

## Claims

1. A mobile communication system for distributing loads on wireless areas to provide a service to a mobile equipment, comprising:
a wireless base station apparatus for providing a plurality of wireless areas on which loads can be distributed; and
a wireless network controller for managing loads on the wireless areas provided by said wireless base station apparatus, determining remaining resources of said wireless areas from said loads on the wireless areas, and selecting a wireless area to be assigned to said mobile equipment based on the result produced by comparing said remaining resources of said wireless areas.

2. A mobile communication system according to claim 1, wherein said wireless network controller holds in advance thresholds determined for the respective wireless areas, and determines the remaining resources of said wireless areas by subtracting the loads on the wireless areas from said thresholds.

3. A mobile communication system according to claim 1, wherein said wireless network controller compares said remaining resources depending on the type of a requested service.

4. A mobile communication system according to claim 1, wherein said wireless network controller selects the wireless area to be assigned to said mobile equipment depending on a request from the mobile equipment.

5. A mobile communication system according to claim 1, wherein said wireless network controller selects the wireless area to be assigned to said mobile equipment depending on a request from a switching system.

6. A wireless network controller for managing a wireless base station apparatus which provides a plurality of wireless areas in a mobile communication system for distributing loads on the wireless areas to provide a service to a mobile equipment, comprising:
a load manager for managing loads on the wireless areas provided by said wireless base station apparatus; and
a load distributor for acquiring said loads managed by said load manager, determining remaining resources of said wireless areas from said loads, and selecting a wireless area to be assigned to said mobile equipment based on the result produced by comparing said remaining resources of said wireless areas.

7. A wireless network controller according to claim 6, wherein said load distributor holds in advance thresholds determined for the respective wireless areas, and determines the remaining resources of said wireless areas by subtracting the loads on the wireless areas from said thresholds.

8. A wireless network controller according to claim 6, wherein said load distributor compares said remaining resources depending on the type of a requested service.

9. A wireless network controller according to claim 6, wherein said load distributor selects the wireless area to be assigned to said mobile equipment depending on a request from the mobile equipment.

10. A wireless network controller according to claim 6, wherein said load distributor selects the wireless area to be assigned to said mobile equipment depending on a request from a switching system.

11. A method of distributing loads in a mobile communication system for distributing loads on wireless areas to provide a service to a mobile equipment, comprising:
managing loads on said wireless areas;
determining remaining resources of said wireless areas from said loads on the wireless areas; and
selecting a wireless area to be assigned to said mobile equipment based on the result produced by comparing said remaining resources of said wireless areas.
